# EUROPÄISCHE PATENTSCHRIFT

(11) **EP 4 782 793 B1**
(45) Veröffentlichungstag und Bekanntmachung des Hinweises auf die Patenterteilung: **25.11.2026**
(21) Anmeldenummer: 25153713.0
(22) Anmeldetag: 24.01.2025
(51) Int. Cl.: G01D 11/30

(54) **BEFESTIGUNGSSYSTEM**
FASTENING SYSTEM
SYSTÈME DE FIXATION

(43) Veröffentlichungstag der Anmeldung: 29.07.2026
(73) Patentinhaber: SICK AG, 79183 Waldkirch (DE)
(72) Erfinder: Scholder, Jochen, 79183 Waldkirch (DE)
(74) Vertreter: Manitz Finsterwald Patent- und Rechtsanwaltspartnerschaft mbB

(56) Entgegenhaltungen:
- DE-A1- 102007 024 230
- DE-A1- 19 939 747
- DE-B3- 102017 123 485

## Beschreibung

Die Erfindung betrifft ein Befestigungssystem zum Befestigen eines Sensors an einer Wandung, mit einem Einbaurahmen, der einen Steckabschnitt zum Einstecken in eine Öffnung der Wandung und einen mit Bezug zu dem Steckabschnitt überstehenden Anschlagabschnitt für einen Anschlag des Einbaurahmens an einem Rand der Öffnung an einer ersten Seite der Wandung aufweist, wobei an dem Einbaurahmen wenigstens ein Sensor-Schnapphaken angeordnet ist, der zwischen einer Raststellung und einer Freigabestellung beweglich ist und der mit einer Stufe des Sensors verrastbar ist, um den Sensor am Einbaurahmen zu halten. Sensoren, die in einer stationären Position verwendet werden sollen, werden häufig an Wandungen wie zum Beispiel Schalttafeln, Blechen oder Gehäuseteilen befestigt. Hierfür kann in der betreffenden Wandung eine Öffnung ausgebildet sein, in die das Gehäuse des Sensors eingesetzt werden kann. Der Einbaurahmen eines wie vorstehend angegebenen Befestigungssystems wird hierfür beispielsweise von vorne in die Öffnung eingesteckt. Anschließend wird der Sensor zum Beispiel in entgegengesetzter Richtung an den Einbaurahmen herangeführt und mit diesem verrastet. Danach muss noch die durch den Einbaurahmen und den Sensor gebildete Einheit an der Wandung befestigt werden. Dies kann beispielsweise durch Verschrauben erfolgen. In diesem Fall ist jedoch für die Montage spezielles Werkzeug erforderlich, was im Allgemeinen unerwünscht ist. Außerdem kann sich die Verschraubung durch Vibrationen lösen. Auch kann sich die Verrastung zwischen Einbaurahmen und Sensor lösen, so dass der Sensor nach hinten aus dem Einbaurahmen herausfällt, wenn zum Beispiel zu fest auf eine an der Vorderseite des Sensorgehäuses vorhandene Taste gedrückt wird. Ein weiteres Problem besteht darin, dass bei einem zu starken Festziehen der Schrauben der Einbaurahmen beschädigt werden kann. DE19939747A1 zeigt eine bekannte Befestigungseinrichtung zur Befestigung von Ultraschallwandlern an Fahrzeugen mit einem Befestigungsrahmen und einem Fixierrahmen.

Es besteht der Wunsch nach einem Befestigungssystem, das eine einfache, kostengünstige, werkzeuglose und stabile Montage eines Sensors in einer Öffnung einer Wandung ermöglicht.

Die Lösung der Aufgabe erfolgt durch ein Befestigungssystem mit den Merkmalen des Anspruchs 1.

Ein erfindungsgemäßes Befestigungssystem umfasst einen Fixierrahmen, der dazu ausgebildet ist, den Anschlagabschnitt des Einbaurahmens unter Abstützung an einer der ersten Seite der Wandung abgewandten zweiten Seite der Wandung gegen die erste Seite der Wandung zu ziehen, um den Einbaurahmen an der Wandung zu halten, wobei der Fixierrahmen mit dem Einbaurahmen koppelbar ist und dazu ausgebildet ist, im gekoppelten Zustand den wenigstens einen Sensor-Schnapphaken zu hintergreifen und ihn dadurch in der Raststellung zu sichern.

Im montierten Zustand liegt der Einbaurahmen fest an der Wandung an, so dass er nicht aus der Öffnung herausfallen kann. Der Sensor ist über den Sensor-Schnapphaken sicher am Einbaurahmen und somit ebenfalls an der Wandung gehalten. Ein Lösen der Verrastung zwischen Einbaurahmen und Sensor wird durch den Fixierrahmen verhindert. Somit erfüllt der Fixierrahmen eine Doppelfunktion, indem er einerseits den Einbaurahmen an der Wandung hält und andererseits den Sensor am Einbaurahmen sichert. Für die Montage ist die Bereitstellung von Werkzeug nicht zwingend erforderlich. Dadurch dass der Sensor-Schnapphaken vom Fixierrahmen hintergriffen wird, besteht auch bei Vibrationen und Stößen nicht die Gefahr, dass sich der Sensor aus der Halterung löst.

Bei dem Sensor kann es sich um einen Drucksensor handeln. Insbesondere in der Prozesstechnik müssen relativ häufig Drucksensoren in Schalttafeln eingebaut werden. Vorzugsweise weist der Sensor ein zumindest im Wesentlichen quaderförmiges Gehäuse auf. Die Stufe kann zum Beispiel durch einen Rand eines solchen quaderförmigen Gehäuses gebildet sein. Grundsätzlich kann der Sensor aber auch ein Gehäuse aufweisen, das an beliebiger Stelle eine Ansatzschulter aufweist, die für den Rasteingriff von dem Sensor-Schnapphaken umgriffen werden kann.

Der Anschlagabschnitt des Einbaurahmens verläuft vorzugsweise rund um den Steckabschnitt, damit eine stabile Anlage des Einbaurahmens an der Wandung ermöglicht ist.

Vorzugsweise sind der Einbaurahmen und/oder der Fixierrahmen aus Kunststoff gefertigt. Insbesondere können der Einbaurahmen und/oder der Fixierrahmen als Spritzgussteile ausgeführt sein, um eine einfache und kostengünstige Herstellung zu ermöglichen. Sollte es zum Beispiel aufgrund besonderer Stabilitätsanforderungen sinnvoll sein, kann der Einbaurahmen und/oder der Fixierrahmen auch aus Blech gefertigt sein.

Bevorzugt ist an dem Fixierrahmen wenigstens ein Federelement angeordnet, das durch eine Bewegung des Fixierrahmens in Richtung der zweiten Seite der Wandung vorspannbar ist. Beispielsweise schlägt beim Heranführen des Fixierrahmens an die zweite Seite der Wandung ein freies Ende eines Druckfederelements an der Wandung an, so dass das Druckfederelement zusammengedrückt wird. Das vorgespannte Federelement zieht den Anschlagabschnitt des Einbaurahmens gegen die erste Seite der Wandung und fixiert so den Einbaurahmen in der Öffnung, wobei eine relativ hohe Varianz der Dicke der Wandung zulässig ist.

Das Federelement kann mit einem Basisteil des Fixierrahmens verrastet sein, so dass es bei Bedarf vom Basisteil abgenommen werden kann. Alternativ kann der Fixierrahmen kann als einstückiges Spritzgussteil samt Federelement ausgeführt sein. Je nach Anwendung können das Basisteil und das Federelement aus dem gleichen Werkstoff oder aus unterschiedlichen Werkstoffen gefertigt sein. Eine spezielle Ausgestaltung der Erfindung sieht vor, dass das Basisteil des Fixierrahmens aus Kunststoff gefertigt ist und das Federelement aus Blech gefertigt ist, oder umgekehrt.

Gemäß einer Ausführungsform der Erfindung sind an zwei entgegengesetzten Randbereichen des Fixierrahmens jeweilige Federelemente angeordnet, die durch eine Bewegung des Fixierrahmens in Richtung der zweiten Seite der Wandung vorspannbar sind. Dadurch wird die Federkraft über den Anschlagabschnitt des Einbaurahmens verteilt, so dass dieser rundum fest an der ersten Seite der Wandung anliegt.

Der Fixierrahmen und die Federelemente können durch eine Baugruppe mit unterschiedlichen Bauteilen gebildet sein. Eine spezielle Ausgestaltung sieht hierbei vor, dass die Federelemente aus einem anderen Werkstoff hergestellt sind als der Fixierrahmen. Beispielsweise können die Federelemente aus einem vergleichsweise elastischen Werkstoff gefertigt sein, während der Fixierrahmen aus einem vergleichsweise steifen Werkstoff gefertigt ist. Es kann aber für eine vereinfachte Konstruktion auch vorgesehen sein, dass die Federelemente aus dem gleichen Werkstoff hergestellt sind wie der Fixierrahmen.

Gemäß einer weiteren Ausgestaltung der Erfindung sind der Fixierrahmen und die Federelemente durch ein Bauteil mit einheitlichem Werkstoff gebildet.

Eine weitere Ausführungsform der Erfindung sieht vor, dass der Fixierrahmen wenigstens einen Gleitführungsabschnitt aufweist, entlang dem der Fixierrahmen in einer Schieberichtung auf den Einbaurahmen aufschiebbar ist. Die geführte Schiebebewegung erleichtert die Montage.

Der wenigstens eine Gleitführungsabschnitt ist vorzugsweise derart ausgestaltet und angeordnet, dass er beim Aufschieben auf den Einbaurahmen am Sensor-Schnapphaken geführt wird. Der Sensor-Schnapphaken, beispielsweise eine ebene Hakenrückseite desselben, bildet bei dieser Ausgestaltung die Gegenführungsfläche für den Gleitführungsabschnitt.

Eine weitere Ausführungsform der Erfindung sieht vor, dass an dem Einbaurahmen zwei gegenläufig bewegliche Sensor-Schnapphaken angeordnet sind und der Fixierrahmen zwei schienenförmige Gleitführungsabschnitte aufweist, die parallel zueinander verlaufen und derart ausgestaltet und angeordnet sind, dass sie beim Aufschieben auf den Einbaurahmen an den gegenläufig beweglichen Sensor-Schnapphaken geführt werden. Der Einbaurahmen wird hierbei über seine Sensor-Schnapphaken zweiseitig umgriffen.

Der Einbaurahmen und der Fixierrahmen sind bevorzugt derart gestaltet, dass der in der Raststellung befindliche Sensor-Schnapphaken durch den wenigstens einen Gleitführungsabschnitt blockiert wird, wenn der Fixierrahmen auf den Einbaurahmen aufgeschoben ist. Dies ermöglicht eine besonders einfache Konstruktion, bei der der Sensor-Schnapphaken beim Aufschieben des Fixierrahmens auf den Einbaurahmen von dem Fixierrahmen automatisch hintergriffen und somit blockiert wird. Das heißt der Gleitführungsabschnitt dient sowohl zur Führung des Fixierrahmens beim Aufschieben auf den Einbaurahmen als auch zum Sichern des Sensor-Schnapphakens, weil der Gleitführungsabschnitt am Sensor-Schnapphaken anliegt und somit eine lösende Bewegung des Sensor-Schnapphakens verhindert.

Gemäß einer speziellen Ausgestaltung der Erfindung weist der Fixierrahmen mindestens eine quer zu der Schieberichtung verlaufende Eingriffsrippe für einen Eingriff in eine Montage-Nut des Sensors auf. Die Eingriffsrippe dient beim Aufschieben des Fixierrahmens auf den Einbaurahmen als Anschlag und sichert zudem den Fixierrahmen über die Montage-Nut am Sensor.

Eine weitere Ausführungsform der Erfindung sieht vor, dass die mindestens eine Eingriffsrippe eine Dicke von 0,7 mm bis 1,2 mm, vorzugsweise von etwa 1 mm, aufweist. Diese Ausgestaltung ist insofern von Vorteil, als viele bestehende Sensoren für eine Hutschienen-Montage ausgelegt sind und hierfür mit einer am Gehäuse ausgebildeten Nut von etwa 1 mm Dicke - einer gängigen Dicke von Hutschienen - versehen sind. Eine solche ohnehin vorhandene Nut kann bei einem erfindungsgemäßen Befestigungssystem in vorteilhafter Weise als Montage-Nut für das Zusammenwirken mit einer Eingriffsrippe verwendet werden. Aus Sicht eines Sensor-Herstellers ist es von Vorteil, dass ein und derselbe Sensor sowohl für eine Hutschienen-Montage als auch für eine Schalttafel-Montage tauglich ist.

Der Fixierrahmen kann mindestens einen Führungsvorsprung aufweisen, welcher in mindestens eine Haltekralle des Sensors eingreift, wenn der Sensor am Einbaurahmen gehalten ist und der Fixierrahmen auf den Einbaurahmen aufgeschoben ist. Dies sorgt für einen sicheren Halt des Fixierrahmens am Sensor.

An dem Fixierrahmen kann eine Rastzunge angeordnet sein, die in eine Gegenrast des Sensors eingreift, wenn der Sensor am Einbaurahmen gehalten ist und der Fixierrahmen auf den Einbaurahmen aufgeschoben ist. Ein unerwünschtes selbsttätiges Zurückschieben, beispielsweise infolge von Vibrationen, ist dadurch ausgeschlossen, so dass der Halt des Fixierrahmens am Einbaurahmen verbessert ist. Für ein gewünschtes Abnehmen des Fixierrahmens kann die Rastzunge zum Beispiel mittels eines Werkzeugs gegen die Federkraft in ihre Lösestellung bewegt werden. An der Rastzunge kann ein Handhabungs-Vorsprung angeordnet sein, zum Beispiel in Form eines Kamms oder einer Rippe, um das Bewegen der Rastzunge in ihre Lösestellung, gegebenenfalls auch ohne Werkzeug, zu erleichtern.

Gemäß einer weiteren Ausführungsform umfasst das Befestigungssystem ein Sicherungs-Element, das in eine Aufnahme des Fixierrahmens einsteckbar ist und im eingesteckten Zustand eine Bewegung des auf den Einbaurahmen aufgeschobenen Fixierrahmens entgegen der Schieberichtung blockiert. Dies sorgt für einen weiter stabilisierten Halt des Fixierrahmens am Sensor und am Einbaurahmen. Das Sicherungs-Element kann wie eine Halteklammer gestaltet sein und Rastelemente für eine Verrastung mit dem Fixierrahmen aufweisen.

Es ist bevorzugt, dass das Sicherungs-Element im eingesteckten Zustand die Rastzunge in ihrer Raststellung sichert. Beispielsweise kann das Sicherungs-Element im eingesteckten und vorzugsweise verrasteten Zustand gegen die Rückseite der Rastzunge drücken. Die Zuverlässigkeit der Befestigung ist hierdurch weiter verbessert.

Es kann vorgesehen sein, dass der Einbaurahmen einen Aufnahmeraum für ein Gehäuse des Sensors definiert und der wenigstens eine Sensor-Schnapphaken den Aufnahmeraum umgreift, wenn er sich in der Raststellung befindet. Ein solches Befestigungssystem eignet sich für alle Sensortypen, die ein Gehäuse mit der Größe und der Form des Aufnahmeraums aufweisen. Es versteht sich, dass der Aufnahmeraum an einen bestimmten Typ von Sensorgehäuse angepasst sein kann.

Eine weitere Ausführungsform der Erfindung sieht vor, dass der Aufnahmeraum quaderförmig ist und an dem Einbaurahmen vier Sensor-Schnapphaken angeordnet sind, die jeweils zwischen einer Raststellung und einer Freigabestellung beweglich sind und die in der Raststellung jeweilige Eckbereiche einer Seite des Aufnahmeraums umgreifen. Dies trägt dem Umstand Rechnung, dass viele Sensoren, insbesondere Drucksensoren, quaderförmige oder kubische Gehäuse aufweisen.

Die Erfindung betrifft auch ein Sensorsystem mit einem Sensor, zum Beispiel einem Drucksensor, und einem wie vorstehend beschriebenen Befestigungssystem, wobei das Befestigungssystem zum Befestigen des Sensors an der Wandung ausgebildet ist.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: zeigt ein erfindungsgemäßes Befestigungssystem, bei dem sich ein Fixierrahmen des Befestigungssystems in einer Ausgangsstellung befindet.
- Fig. 2: zeigt das Befestigungssystem gemäß Fig. 1, wobei sich der Fixierrahmen in einer Endstellung befindet.
- Fig. 3: zeigt einen Einbaurahmen des Befestigungssystems gemäß Fig. 1 in einer perspektivischen Einzelansicht.
- Fig. 4: ist eine seitliche Schnittansicht eines Sensors, der durch ein erfindungsgemäßes Befestigungssystem in einer Öffnung einer Wandung gehalten ist.
- Fig. 5: zeigt das Befestigungssystem gemäß Fig. 1 zusammen mit einem Sicherungs-Element.
- Fig. 6: ist eine Teildarstellung der in Fig. 5 gezeigten Anordnung mit in einer Fixierstellung befindlichem Sicherungs-Element.
- Fig. 7: ist eine Teilschnittdarstellung des Befestigungssystems gemäß Fig. 1, das den Eingriff einer Rastzunge mit einem Sensorgehäuse zeigt.

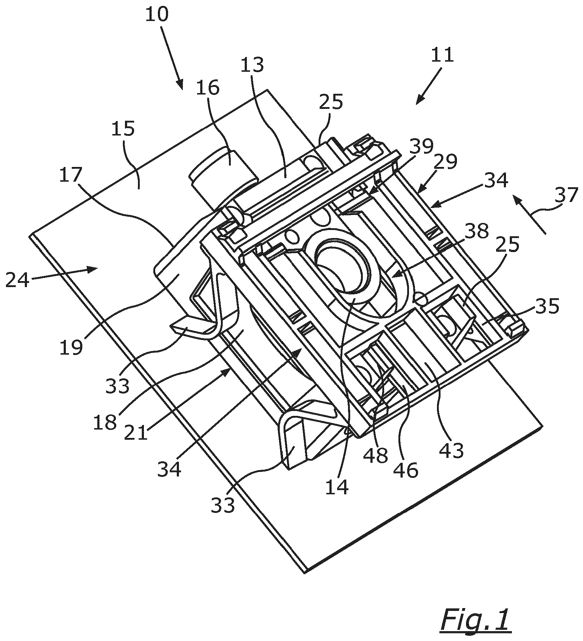

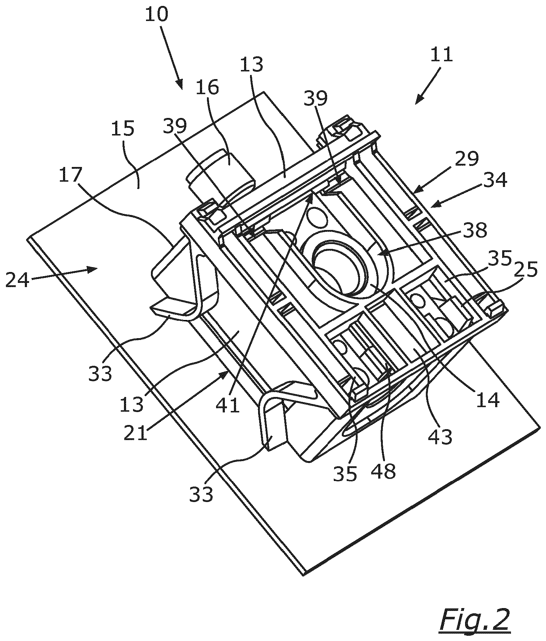

Das in Fig. 1 und 2 gezeigte, gemäß einer Ausführungsform der Erfindung gestaltete Sensorsystem 10 umfasst einen Sensor 13 und ein erfindungsgemäßes Befestigungssystem 11 zum Befestigen des Sensors 13 an einer Wandung 15 wie zum Beispiel an einer Schalttafel. Der Sensor 13 ist bei dem dargestellten Ausführungsbeispiel als Drucksensor ausgebildet und weist dementsprechend wenigstens einen Druckanschluss 14 für den Anschluss einer druckführenden Leitung sowie einen elektrischen Anschluss 16 für die Versorgung des Sensors 13 mit elektrischer Energie und für die Ausgabe eines Drucksignals auf. Das Gehäuse 18 des Sensors 13 ist zumindest im Wesentlichen quaderförmig.

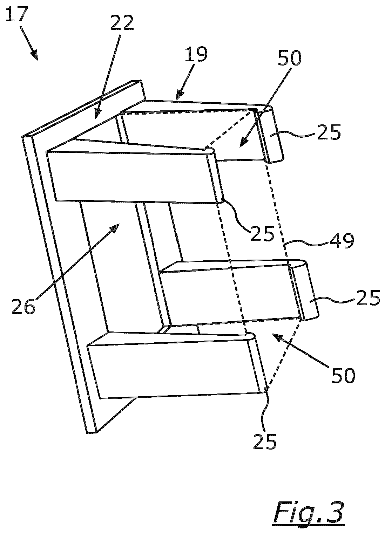

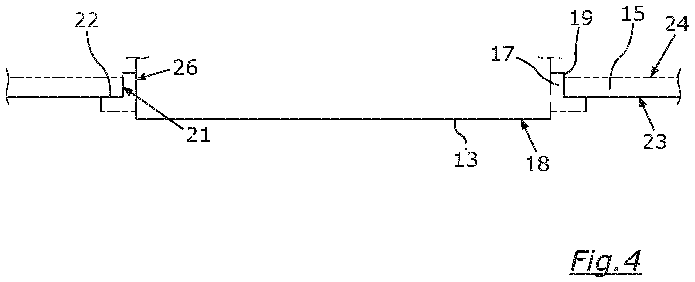

Das Befestigungssystem 11 umfasst einen Einbaurahmen 17, der in Fig. 3 in Einzeldarstellung gezeigt ist. Der bevorzugt als Kunststoff-Spritzgussteil ausgeführte Einbaurahmen 17 umfasst einen Steckabschnitt 19, der zum Einstecken in eine Öffnung 21 (Fig. 1) der Wandung 15 dient und bevorzugt hinsichtlich seiner Querschnittsform und -größe an eine vorgegebene Öffnung 21 angepasst ist. Ein mit Bezug zu dem Steckabschnitt 19 seitlich überstehender Anschlagabschnitt 22 ist für einen Anschlag des Einbaurahmens 17 an einem Rand der Öffnung 21 an einer ersten Seite 23 der Wandung 15 vorgesehen, wie dies in Fig. 4 dargestellt ist. Der Anschlagabschnitt 22 verläuft rund um eine zentrale Rahmenöffnung 26 des Einbaurahmens 17. An dem Einbaurahmen 17 ist weiterhin eine Anordnung aus vier federnden Sensor-Schnapphaken 25 angeordnet, die jeweils zwischen einer Raststellung und einer Freigabestellung beweglich sind.

Wie in Fig. 3 erkennbar ist durch den Anschlagabschnitt 22 und die Sensor-Schnapphaken 25 ein Aufnahmeraum 49 des Einbaurahmens 17 gebildet, in welchem das Gehäuse 18 des Sensors 13 untergebracht werden kann. Der Sensor 13 kann hierfür zwischen die Sensor-Schnapphaken 25 eingeführt werden, wobei die den Aufnahmeraum 49 umgreifenden Sensor-Schnapphaken 25 mit dem Gehäuse 18 des Sensors 13 verrasten und den Sensor 13 dadurch am Einbaurahmen 17 halten.

Bei der dargestellten Ausführungsform ist der Aufnahmeraum 49 quaderförmig und die vier Sensor-Schnapphaken 25 umgreifen in ihren Raststellungen die rückwärtigen Eckbereiche 50 des Aufnahmeraums 49. Der Aufnahmeraum 49 kann jedoch in Abhängigkeit von dem aufzunehmenden Sensor 13 auch eine andere Form aufweisen.

Wieder auf Fig. 1 und 2 Bezug nehmend wird nachfolgend ein Fixierrahmen 29 des Befestigungssystems 11 beschrieben. Der Fixierrahmen 29 ist vorzugsweise als Kunststoff-Spritzgussteil ausgebildet oder aus mehreren Kunststoff-Spritzgussteilen zusammengesetzt und weist an zwei entgegengesetzten Randbereichen 34 jeweilige Federelemente 33 auf, hier in Form von gebogenen Streifen aus elastischem Material.

An dem Fixierrahmen 29 sind ferner zwei schienenförmige Gleitführungsabschnitte 35 ausgebildet, die parallel zueinander in einer Schieberichtung 37 verlaufen. Außerdem sind an dem Fixierrahmen 29 zwei ebenfalls in der Schieberichtung 37 verlaufende, hier plattenartige Führungsvorsprünge 46 ausgebildet. Diese sind für eine gleitende Führung in Haltekrallen 48 ausgebildet, welche am Gehäuse 18 des Sensors 13 angeordnet sind. Die Haltekrallen 48 sind durch abgewinkelte Streifen oder Platten gebildet und weisen mit ihren Öffnungen aufeinander zu. Quer zu der Schieberichtung 37 verläuft eine Eingriffsrippe 39 des Fixierrahmens 29, die an eine Montage-Nut 41 des Sensors 13 angepasst ist und bevorzugt eine Dicke von etwa 1 mm aufweist. Wie gezeigt ist die Eingriffsrippe 39 hier unterbrochen und verläuft beidseits einer Aussparung 38 des Fixierrahmens 29, die zur Aufnahme des Druckanschlusses 14 des Sensors 13 vorgesehen ist. Zwischen den beiden Gleitführungsabschnitten 35 befindet sich eine Rastzunge 43, die quer zu der Schieberichtung 37 und quer zum Verlauf der Eingriffsrippe 39 federnd beweglich ist.

Für die Montage des Sensors 13 wird zunächst der Einbaurahmen 17 in die Öffnung 21 eingesetzt, indem der Steckabschnitt 19 von vorn durch die Öffnung 21 geführt wird, bis der Anschlagabschnitt 22 an der ersten Seite 23 der Wandung 15 anschlägt. Dann wird der Sensor 13 in den Einbaurahmen 17 eingesetzt, wobei die Sensor-Schnapphaken 25 am Gehäuse 18 des Sensors 13 einrasten und diesen am Einbaurahmen 17 halten. Das Gehäuse 18 kann teilweise durch die Rahmenöffnung 26 ragen, wie dies in Fig. 4 dargestellt ist. Vorzugsweise ist am Gehäuse 18 des Sensors 13 ein in den Figuren nicht erkennbarer Anschlag vorgesehen, der einen Durchtritt des Sensors 13 durch die Rahmenöffnung 26 verhindert.

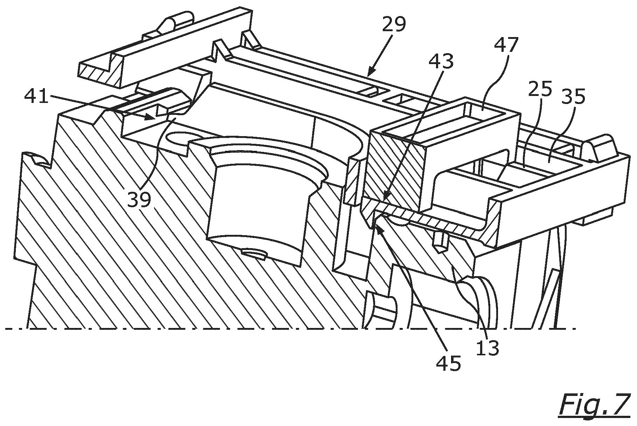

Anschließend wird der Fixierrahmen 29 wie in Fig. 1 gezeigt unter Vorspannung der Federelemente 33 auf die Einheit aus Einbaurahmen 17 und Sensor 13 aufgesetzt, wobei der Druckanschluss 14 des Sensors 13 in die Aussparung 38 gelangt und die Gleitführungsabschnitte 35 in einen Kontakt mit den Sensor-Schnapphaken 25 gelangen. Der Fixierrahmen 29 wird dann unter Führung durch die Gleitführungsabschnitte 35 an den Sensor-Schnapphaken 25 in der Schieberichtung 37 auf den Einbaurahmen 17 aufgeschoben, bis die in Fig. 2 dargestellte Endstellung erreicht ist, in welcher die Eingriffsrippe 39 in die Montage-Nut 41 des Sensors 13 eingreift, die Führungsvorsprünge 46 von den Haltekrallen 48 des Sensors 13 umgriffen sind und die Rastzunge 43 wie in Fig. 7 erkennbar in eine Gegenrast 45 des Sensors 13 eingeschnappt ist.

In der Endstellung des Fixierrahmens 29 ist dieser über die Eingriffsrippe 39 und die Führungsvorsprünge 46 mit dem Sensor 13 gekoppelt. Die Federelemente 33 stützen sich an der zweiten Seite 24 der Wandung 15 ab und sorgen dafür, dass der Anschlagabschnitt 22 des Einbaurahmens 17 gegen die erste Seite 23 der Wandung 15 gezogen wird, wodurch der Einbaurahmen 17 fest an der Wandung 15 gehalten ist.

Bei einer nicht gezeigten Ausgestaltung sind anstelle der Federelemente 33 an dem Fixierrahmen Gewindebuchsen vorgesehen, in die Spannschrauben einschraubbar sind und die so ausgerichtet sind, dass die eingeschraubten Spannschrauben sich mit ihrer Schraubenspitze an der zweiten Seite 24 der Wandung 15 abstützen können. Dadurch kann eine ähnliche Wirkung erzielt werden wie durch die Federelemente 33. Die Köpfe der Spannschrauben können mit Flügeln oder Hebeln versehen sein, so dass zum Spannen kein Werkzeuggebrauch notwendig ist.

Da der Fixierrahmen 29 in seiner Endstellung formschlüssig am Sensor 13 gehalten ist und das Gehäuse 18 des Sensors 13 über die Sensor-Schnapphaken 25 mit dem Einbaurahmen 17 gekoppelt ist, besteht eine feste Verbindung zwischen dem Fixierrahmen 29 und dem Einbaurahmen 17. Wie in Fig. 2 erkennbar liegen im gekoppelten Zustand die Gleitführungsabschnitte 35 an den Rückseiten der Sensor-Schnapphaken 25 an, so dass diese sich nicht in ihre zurückgebogenen Freigabestellungen bewegen können. Das heißt die Sensor-Schnapphaken 25 sind von den Gleitführungsabschnitten 35 hintergriffen und dadurch in ihren Raststellungen gesichert. Eine entrastende Bewegung der Sensor-Schnapphaken 25 ist blockiert und ein Lösen der Verrastung somit sicher unterbunden. Ein Zurückschieben des Fixierrahmens 29 entgegen der Schieberichtung 37 in die Ausgangsstellung gemäß Fig. 1 ist ebenfalls unterbunden, weil die Rastzunge 43 in die Gegenrast 45 des Sensors 13 eingreift. Selbst ausgeprägte Vibrationen und Stöße können den Sensor 13 nicht während des Betriebs von der Wandung 15 lösen.

Falls der Sensor 13 von der Wandung 15 gelöst werden soll, beispielsweise für eine Wartung oder Reparatur, wird die Rastzunge 43 mittels eines Schraubendrehers oder dergleichen leicht angehoben und der Fixierrahmen 29 wird entgegen der Schieberichtung 37 verschoben, bis die Führungsvorsprünge 46 aus den Haltekrallen 48 herausgelangt sind und die Eingriffsrippe 39 aus der Montage-Nut 41 herausgelangt ist. Anschließend kann der Fixierrahmen 29 nach hinten vom Einbaurahmen 17 abgenommen werden und der Sensor 13 kann, gegebenenfalls unter leichten Zurückbiegen einiger oder aller Sensor-Schnapphaken 25, vom Einbaurahmen 17 abgenommen werden.

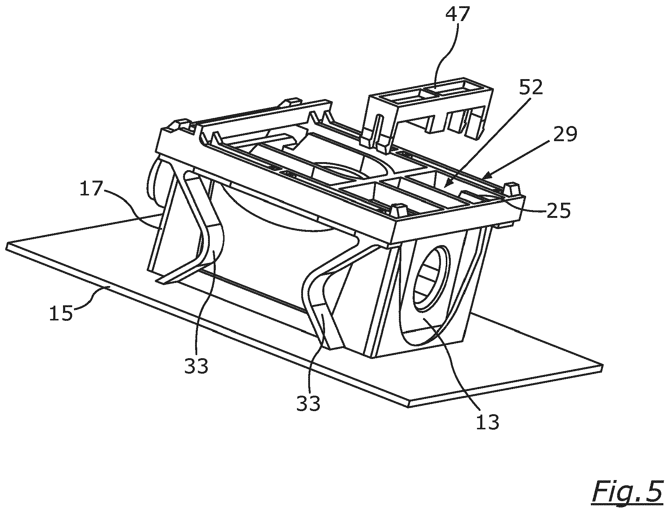

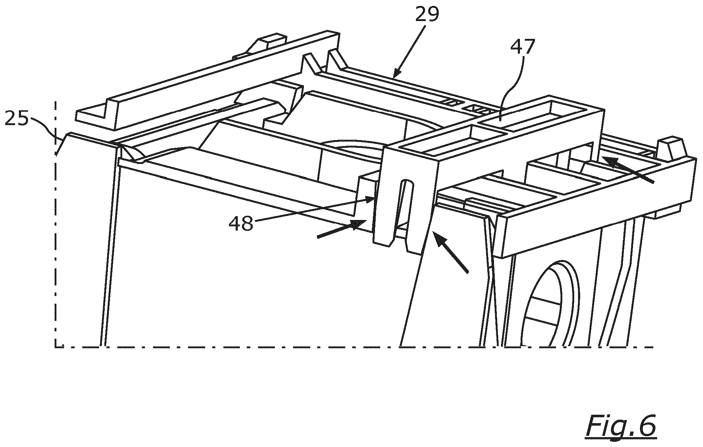

In den Fig. 5-7 ist ein Sicherungs-Element 47 des Befestigungssystems 11 gezeigt, das bei besonders hohen Stabilitätsanforderungen eingesetzt werden kann. Das klammerartige Sicherungs-Element 47 ist in eine Aufnahme 52 des Fixierrahmens 29 einsteckbar. Im eingesteckten Zustand ist dann eine Bewegung des auf den Einbaurahmen 17 aufgeschobenen Fixierrahmens 29 in und insbesondere entgegen der Schieberichtung 37 blockiert, wie in Fig. 6 durch Pfeile angegeben ist. Wie in Fig. 7 ersichtlich ist auch die Rastzunge 43 blockiert, wenn das Sicherungs-Element 47 in die Aufnahme 52 eingesteckt ist. Das Sicherungs-Element 47 weist hier also eine zweifache Sicherungsfunktion auf.

Das Befestigungssystem 11 ermöglicht mit einfachen Mitteln eine schnelle und werkzeuglose Montage des Sensors 13 in der Öffnung 21 der Wandung 15, die hohen Stabilitätsanforderungen genügt.

### Bezugszeichenliste:

- 10: Sensorsystem
- 11: Befestigungssystem
- 13: Sensor
- 14: Druckanschluss
- 15: Wandung
- 16: elektrischer Anschluss
- 17: Einbaurahmen
- 18: Gehäuse
- 19: Steckabschnitt
- 21: Öffnung
- 22: Anschlagabschnitt
- 23: erste Seite
- 24: zweite Seite
- 25: Sensor-Schnapphaken
- 26: Rahmenöffnung
- 29: Fixierrahmen
- 33: Federelement
- 35: Gleitführungsabschnitt
- 37: Schieberichtung
- 38: Aussparung
- 39: Eingriffsrippe
- 41: Montage-Nut
- 43: Rastzunge
- 45: Gegenrast
- 46: Führungsvorsprung
- 47: Sicherungselement
- 48: Haltekralle
- 49: Aufnahmeraum
- 50: Eckbereich
- 52: Aufnahme

## Patentansprüche

1. Befestigungssystem (11) zum Befestigen eines Sensors (13) an einer Wandung (15), mit einem Einbaurahmen (17), der einen Steckabschnitt (19) zum Einstecken in eine Öffnung (21) der Wandung und einen mit Bezug zu dem Steckabschnitt (19) überstehenden Anschlagabschnitt (22) für einen Anschlag des Einbaurahmens (17) an einem Rand der Öffnung (21) an einer ersten Seite (23) der Wandung (15) aufweist,
wobei an dem Einbaurahmen (17) wenigstens ein Sensor-Schnapphaken (25) angeordnet ist, der zwischen einer Raststellung und einer Freigabestellung beweglich ist und der mit einer Stufe des Sensors (13) verrastbar ist, um den Sensor (13) am Einbaurahmen (17) zu halten,
wobei das Befestigungssystem (11) einen Fixierrahmen (29) umfasst, der dazu ausgebildet ist, den Anschlagabschnitt (22) des Einbaurahmens (17) unter Abstützung an einer der ersten Seite (23) der Wandung (15) abgewandten zweiten Seite (24) der Wandung (15) gegen die erste Seite (23) der Wandung (15) zu ziehen, um den Einbaurahmen (17) an der Wandung (15) zu halten,
wobei der Fixierrahmen (29) mit dem Einbaurahmen (17) koppelbar ist und dazu ausgebildet ist, im gekoppelten Zustand den wenigstens einen Sensor-Schnapphaken (25) zu hintergreifen und ihn dadurch in der Raststellung zu sichern.

2. Befestigungssystem nach Anspruch 1,
wobei an dem Fixierrahmen (29) wenigstens ein Federelement (33) angeordnet ist, das durch eine Bewegung des Fixierrahmens (29) in Richtung der zweiten Seite (24) der Wandung (15) vorspannbar ist.

3. Befestigungssystem nach Anspruch 2,
wobei an zwei entgegengesetzten Randbereichen (34) des Fixierrahmens (29) jeweilige Federelemente (33) angeordnet sind, die durch eine Bewegung des Fixierrahmens (29) in Richtung der zweiten Seite (24) der Wandung (15) vorspannbar sind.

4. Befestigungssystem nach einem der vorstehenden Ansprüche,
wobei der Fixierrahmen (29) wenigstens einen Gleitführungsabschnitt (35) aufweist, entlang dem der Fixierrahmen (29) in einer Schieberichtung (37) auf den Einbaurahmen (17) aufschiebbar ist.

5. Befestigungssystem nach Anspruch 4,
wobei der wenigstens eine Gleitführungsabschnitt (35) derart ausgestaltet und angeordnet ist, dass er beim Aufschieben auf den Einbaurahmen (17) am Sensor-Schnapphaken (25) geführt wird.

6. Befestigungssystem nach Anspruch 5,
wobei an dem Einbaurahmen (17) zwei gegenläufig bewegliche Sensor-Schnapphaken (25) angeordnet sind und der Fixierrahmen (29) zwei schienenförmige Gleitführungsabschnitte (35) aufweist, die parallel zueinander verlaufen und derart ausgestaltet und angeordnet sind, dass sie beim Aufschieben auf den Einbaurahmen (17) an den gegenläufig beweglichen Sensor-Schnapphaken (25) geführt werden.

7. Befestigungssystem nach Anspruch 5 oder 6,
wobei der Einbaurahmen (17) und der Fixierrahmen (29) derart gestaltet sind, dass der in der Raststellung befindliche Sensor-Schnapphaken (25) durch den wenigstens einen Gleitführungsabschnitt (35) blockiert wird, wenn der Fixierrahmen (29) auf den Einbaurahmen (17) aufgeschoben ist.

8. Befestigungssystem nach einem der Ansprüche 4 bis 7,
wobei der Fixierrahmen (29) mindestens eine quer zu der Schieberichtung (37) verlaufende Eingriffsrippe (39) für einen Eingriff in eine Montage-Nut (41) des Sensors (13) aufweist, wobei die mindestens eine Eingriffsrippe (39) vorzugsweise eine Dicke von 0,7 mm bis 1,2 mm, besonders bevorzugt von etwa 1 mm, aufweist.

9. Befestigungssystem nach einem der Ansprüche 4 bis 8,
wobei der Fixierrahmen (29) mindestens einen Führungsvorsprung (46) aufweist, welcher in mindestens eine Haltekralle (48) des Sensors (13) eingreift, wenn der Sensor (13) am Einbaurahmen (17) gehalten ist und der Fixierrahmen (29) auf den Einbaurahmen (17) aufgeschoben ist.

10. Befestigungssystem nach einem der Ansprüche 4 bis 9,
wobei an dem Fixierrahmen (29) eine Rastzunge (43) angeordnet ist, die in eine Gegenrast (45) des Sensors (13) eingreift, wenn der Sensor (13) am Einbaurahmen (17) gehalten ist und der Fixierrahmen (29) auf den Einbaurahmen (17) aufgeschoben ist.

11. Befestigungssystem nach einem der Ansprüche 4 bis 10,
wobei das Befestigungssystem (11) ein Sicherungs-Element (47) umfasst, das in eine Aufnahme (52) des Fixierrahmens (29) einsteckbar ist und im eingesteckten Zustand eine Bewegung des auf den Einbaurahmen (17) aufgeschobenen Fixierrahmens (29) entgegen der Schieberichtung (37) blockiert.

12. Befestigungssystem nach Anspruch 10 und Anspruch 11,
wobei das Sicherungs-Element (47) im eingesteckten Zustand die Rastzunge (43) in ihrer Raststellung sichert.

13. Befestigungssystem nach einem der vorstehenden Ansprüche,
wobei der Einbaurahmen (17) einen Aufnahmeraum (49) für ein Gehäuse des Sensors (13) definiert und der wenigstens eine Sensor-Schnapphaken (25) den Aufnahmeraum (49) umgreift, wenn er sich in der Raststellung befindet.

14. Befestigungssystem nach Anspruch 13,
wobei der Aufnahmeraum (49) quaderförmig ist und an dem Einbaurahmen (17) vier Sensor-Schnapphaken (25) angeordnet sind, die jeweils zwischen einer Raststellung und einer Freigabestellung beweglich sind und die in der Raststellung jeweilige Eckbereiche (50) einer Seite des Aufnahmeraums (49) umgreifen.

15. Sensorsystem mit einem Sensor (13), insbesondere einem Drucksensor, und einem Befestigungssystem (11) nach einem der vorstehenden Ansprüche, wobei das Befestigungssystem (11) zum Befestigen des Sensors (13) an der Wandung (15) ausgebildet ist.

## Claims

1. A fastening system (11) for fastening a sensor (13) to a wall (15), said fastening system (11) comprising an installation frame (17) which has a plug-in section (19) for a plugging into an opening (21) of the wall and an abutment section (22), which projects with respect to the plug-in section (19), for an abutting of the installation frame (17) at a margin of the opening (21) at a first side (23) of the wall (15),
wherein at least one sensor snap-in hook (25) is arranged at the installation frame (17), said sensor snap-in hook (25) being movable between a latch position and a release position and being latchable to a step of the sensor (13) in order to hold the sensor (13) at the installation frame (17), wherein the fastening system (11) comprises a fixing frame (29) which is configured to pull the abutment section (22) of the installation frame (17), while being supported at a second side (24) of the wall (15) facing away from the first side (23) of the wall (15), toward the first side (23) of the wall (15) in order to hold the installation frame (17) at the wall (15),
wherein the fixing frame (29) can be coupled to the installation frame (17) and is configured to engage behind the at least one sensor snap-in hook (25) in the coupled state and, as a result, to secure said sensor snap-in hook (25) in the latch position.

2. A fastening system according to claim 1,
wherein at least one spring element (33) is arranged at the fixing frame (29) and can be preloaded by a movement of the fixing frame (29) in the direction of the second side (24) of the wall (15).

3. A fastening system according to claim 2,
wherein respective spring elements (33) are arranged at two opposite marginal regions (34) of the fixing frame (29) and can be preloaded by a movement of the fixing frame (29) in the direction of the second side (24) of the wall (15).

4. A fastening system according to any one of the preceding claims,
wherein the fixing frame (29) has at least one sliding guide section (35) along which the fixing frame (29) can be pushed onto the installation frame (17) in a sliding direction (37).

5. A fastening system according to claim 4,
wherein the at least one sliding guide section (35) is designed and arranged such that it is guided at the sensor snap-in hook (25) on the pushing onto the installation frame (17).

6. A fastening system according to claim 5,
wherein two sensor snap-in hooks (25) movable in opposite directions are arranged at the installation frame (17) and the fixing frame (29) has two rail-shaped sliding guide sections (35) which extend parallel to one another and which are designed and arranged such that, on the pushing onto the installation frame (17), they are guided at the sensor snap-in hooks (25) movable in opposite directions.

7. A fastening system according to claim 5 or 6,
wherein the installation frame (17) and the fixing frame (29) are designed such that the sensor snap-in hook (25) that is in the latch position is blocked by the at least one sliding guide section (35) when the fixing frame (29) is pushed onto the installation frame (17).

8. A fastening system according to any one of the claims 4 to 7,
wherein the fixing frame (29) has at least one engagement rib (39), which extends transversely to the sliding direction (37), for an engagement into an assembly groove (41) of the sensor (13), wherein the at least one engagement rib (39) preferably has a thickness of 0.7 mm to 1.2 mm, particularly preferably of approximately 1 mm.

9. A fastening system according to any one of the claims 4 to 8,
wherein the fixing frame (29) has at least one guide projection (46) which engages into at least one holding claw (48) of the sensor (13) when the sensor (13) is held at the installation frame (17) and the fixing frame (29) is pushed onto the installation frame (17).

10. A fastening system according to any one of the claims 4 to 9,
wherein a latching tongue (43) is arranged at the fixing frame (29) and engages into a counter-latch (45) of the sensor (13) when the sensor (13) is held at the installation frame (17) and the fixing frame (29) is pushed onto the installation frame (17).

11. A fastening system according to any one of the claims 4 to 10,
wherein the fastening system (11) comprises a securing element (47) which can be plugged into a receiver (52) of the fixing frame (29) and which blocks a movement of the fixing frame (29) pushed onto the installation frame (17) against the sliding direction (37) in the plugged-in state.

12. A fastening system according to claim 10 and claim 11,
wherein the securing element (47) secures the latching tongue (43) in its latch position in the plugged-in state.

13. A fastening system according to any one of the preceding claims,
wherein the installation frame (17) defines a receiving space (49) for a housing of the sensor (13) and the at least one sensor snap-in hook (25) engages around the receiving space (49) when said sensor snap-in hook (25) is in the latch position.

14. A fastening system according to claim 13,
wherein the receiving space (49) is cuboid-shaped and four sensor snap-in hooks (25) are arranged at the installation frame (17) that are each movable between a latch position and a release position and that engage around respective corner regions (50) of one side of the receiving space (49) in the latch position.

15. A sensor system comprising a sensor (13), in particular a pressure sensor, and a fastening system (11) according to any one of the preceding claims, wherein the fastening system (11) is configured to fasten the sensor (13) to the wall (15).

## Revendications

1. Système de fixation (11) pour fixer un capteur (13) à une paroi (15), présentant un cadre de montage (17) qui présente une section d'insertion (19) destinée à être insérée dans une ouverture (21) de la paroi et une portion de butée (22) faisant saillie par rapport à la section d'insertion (19) pour une butée du cadre de montage (17) contre un bord de l'ouverture (21) sur un premier côté (23) de la paroi (15),
dans lequel au moins un crochet d'encliquetage de capteur (25) est agencé sur le cadre de montage (17), lequel est mobile entre une position d'encliquetage et une position de libération et lequel peut s'encliqueter avec une marche du capteur (13) afin de maintenir le capteur (13) sur le cadre de montage (17),
dans lequel le système de fixation (11) comprend un cadre de fixation (29) qui est configuré pour tirer la portion de butée (22) du cadre de montage (17) contre le premier côté (23) de la paroi (15) en prenant appui sur un deuxième côté (24) de la paroi (15) opposé au premier côté (23) de la paroi (15), afin de maintenir le cadre de montage (17) sur la paroi (15),
dans lequel le cadre de fixation (29) est couplable au cadre de montage (17) et est configuré, à l'état couplé, pour s'engager derrière l'au moins un crochet d'encliquetage de capteur (25) et ainsi le sécuriser dans la position d'encliquetage.

2. Système de fixation selon la revendication 1,
dans lequel au moins un élément ressort (33) est agencé sur le cadre de fixation (29), lequel peut être précontraint par un mouvement du cadre de fixation (29) en direction du deuxième côté (24) de la paroi (15).

3. Système de fixation selon la revendication 2,
dans lequel des éléments ressort (33) respectifs sont agencés sur deux zones de bord opposées (34) du cadre de fixation (29), lesquels peuvent être précontraints par un mouvement du cadre de fixation (29) en direction du deuxième côté (24) de la paroi (15).

4. Système de fixation selon l'une des revendications précédentes,
dans lequel le cadre de fixation (29) présente au moins une section de guidage coulissante (35), le long de laquelle le cadre de fixation (29) peut être coulissé sur le cadre de montage (17) dans une direction de coulissement (37).

5. Système de fixation selon la revendication 4,
dans lequel ladite au moins une section de guidage coulissante (35) est configurée et agencée de telle sorte qu'elle est guidée sur le crochet d'encliquetage de capteur (25) lors du coulissement sur le cadre de montage (17).

6. Système de fixation selon la revendication 5,
dans lequel deux crochets d'encliquetage de capteur mobiles en sens opposés sont agencés sur le cadre de montage (17) et le cadre de fixation (29) présente deux sections de guidage coulissantes (35) en forme de rails, qui s'étendent parallèlement l'une à l'autre et sont configurées et agencées de telle sorte qu' elles sont guidées sur les crochets d'encliquetage de capteur mobiles en sens opposés (25) lors du coulissement sur le cadre de montage (17).

7. Système de fixation selon la revendication 5 ou 6,
dans lequel le cadre de montage (17) et le cadre de fixation (29) sont conçus de telle sorte que le crochet d'encliquetage de capteur (25) se trouvant dans la position d'encliquetage est bloqué par ladite au moins une section de guidage coulissante (35) lorsque le cadre de fixation (29) a été coulissé sur le cadre de montage (17).

8. Système de fixation selon l'une quelconque des revendications 4 à 7,
dans lequel le cadre de fixation (29) présente au moins une nervure d'engagement (39) s'étendant transversalement à la direction de coulissement (37) pour un engagement dans une rainure de montage (41) du capteur (13), dans lequel ladite au moins une nervure d'engagement (39) présente de préférence une épaisseur de 0,7 mm à 1,2 mm, particulièrement de préférence d'environ 1 mm.

9. Système de fixation selon l'une quelconque des revendications 4 à 8,
dans lequel le cadre de fixation (29) présente au moins une saillie de guidage (46) qui s'engage dans au moins une griffe de retenue (48) du capteur (13) lorsque le capteur (13) est maintenu sur le cadre de montage (17) et que le cadre de fixation (29) a été coulissé sur le cadre de montage (17).

10. Système de fixation selon l'une quelconque des revendications 4 à 9,
dans lequel une languette d'encliquetage (43) est agencée sur le cadre de fixation (29), laquelle s'engage dans un contre-encliquetage (45) du capteur (13) lorsque le capteur (13) est maintenu sur le cadre de montage (17) et que le cadre de fixation (29) a été coulissé sur le cadre de montage (17).

11. Système de fixation selon l'une quelconque des revendications 4 à 10,
dans lequel le système de fixation (11) comprend un élément de sécurisation (47) qui peut être inséré dans un logement (52) du cadre de fixation (29) et qui, à l'état inséré, bloque un mouvement du cadre de fixation (29) coulissé sur le cadre de montage (17) à l'encontre de la direction de coulissement (37).

12. Système de fixation selon la revendication 10 et la revendication 11,
dans lequel l'élément de sécurisation (47), à l'état inséré, sécurise la languette d'encliquetage (43) dans sa position d'encliquetage.

13. Système de fixation selon l'une des revendications précédentes,
dans lequel le cadre de montage (17) définit un espace de réception (49) pour un boîtier du capteur (13) et ledit au moins un crochet d'encliquetage de capteur (25) entoure l'espace de réception (49) lorsqu'il se trouve dans la position d'encliquetage.

14. Système de fixation selon la revendication 13,
dans lequel l'espace de réception (49) est de forme parallélépipédique et quatre crochets d'encliquetage de capteur (25) sont agencés sur le cadre de montage (17), lesquels sont chacun mobiles entre une position d'encliquetage et une position de libération et lesquels, dans la position d'encliquetage, entourent des zones d'angle (50) respectives d'un côté de l'espace de réception (49).

15. Système de capteurs avec un capteur (13), en particulier un capteur de pression, et un système de fixation (11) selon l'une des revendications précédentes, dans lequel le système de fixation (11) est configuré pour fixer le capteur (13) à la paroi (15).
